# EUROPEAN PATENT SPECIFICATION

(11) **EP 3 371 969 B1**
(45) Date of publication and mention of the grant of the patent: **22.04.2020**
(21) Application number: 16791386.2
(22) Date of filing: 03.11.2016
(51) Int. Cl.: H04N 7/18, B60R 1/00, B61L 23/00

(54) **RAIL VEHICLE PROVIDED WITH AN INTERNALLY MOUNTED VIDEO CAMERA WITH EXTERNAL FIELD OF VISION**
SCHIENENFAHRZEUG MIT INNEN MONTIERTER VIDEOKAMERA MIT EXTERNEM SICHTFELD
VÉHICULE FERROVIAIRE COMPORTANT UNE CAMÉRA VIDÉO MONTÉE DE MANIÈRE INTERNE AVEC UN CHAMP DE VISION EXTERNE

(30) Priority: 06.11.2015 GB 201519804
(43) Date of publication of application: 12.09.2018
(73) Proprietor: Bombardier Transportation GmbH, 10785 Berlin (DE)
(72) Inventor: LUCAS, Chris, Derbyshire DE22 2PZ (GB)
(74) Representative: Alatis
(86) International application number: PCT/EP2016/076599
(87) International publication number: WO 2017/076995

(56) References cited:
- CN-U- 204 137 001
- FR-A1- 2 672 857
- JP-A- H0 268 265
- US-B1- 7 057 500

## Description

### TECHNICAL FIELD OF THE INVENTION

The present invention relates to a rail vehicle provided with one or more video cameras for monitoring a region in the vicinity of the side doors for accessing and alighting from the vehicle.

### BACKGROUND ART

For obvious passenger safety reasons, it is necessary to monitor the platform of a station before closing the doors of a public transportation vehicle. Historically, this has been the responsibility of the stationmaster or of an on board train manager. With the development of driver-only operation (DOO) of rail vehicles in the 1970s, in particular for metros and suburban trains, CCTV video cameras have been deployed at stations along the boarding platform to detect potentially hazardous situation. Such video cameras are usually connected to video monitors located on the platform in front of the driver's cabin or even installed on-board the vehicle inside the driver's cabin , as disclosed e.g. in WO 94/00953. More recently, real time image processing systems have made it possible to automatically detect potentially hazardous situations based on CCTV signals and stereovision technology and to assist or replace human surveillance of the video monitors. However, because these types of systems are part of the station equipment, they are difficult to adapt to a fleet of vehicles circulating on the same track including vehicles of different types, different lengths or with a different number or location of doors.

Alternatively, a CCTV monitoring system can be provided directly on the train as disclosed e.g. in EP 2 571 265. Such systems may include a plurality of on-board video cameras mounted on the sidewalls of the car body for monitoring the doors. Each video camera is housed in a weatherproof plastic housing outside the vehicle. Video signals are transmitted via cables to a video-encoder in each car and from there via an Ethernet cable bundle to a video monitor in the driver's cabin. This requires cable bushings between the video cameras outside the vehicle and the wired network inside the vehicle.

It may also be useful to visually monitor other regions close to the car body of a rail vehicle, in particular on the roof of a locomotive or multiple unit vehicle, where a current collector is located, in order to monitor the position or state of the current collector. To this effect, it has been proposed in CN 204137001U to provide a viewing window that protrudes on top of the roof to provide a direct view towards a current collector from inside the rail vehicle.

A rail vehicle having at least one car body, and a monitoring device comprising a video camera for monitoring a monitored zone located outside the car bodies alongside several side door openings provided in a side wall of the car body for boarding and alighting from the rail vehicle is disclosed in JP H02 68265 A. A set of video cameras on a rail vehicle with co-operates with a set of stationary mirrors on the platform of the station, which are not part or the monitoring device on the rail vehicle.

Rear view monitoring system with video assemblies for motor vehicles are disclosed in US7057500 and FR2672857. Mirrors or prisms are used to redirect light from the rear of the vehicle towards side cameras inside the vehicle.

### SUMMARY OF THE INVENTION

The invention aims to provide simple and reliable means to monitor a monitored zone outside a car body of a rail vehicle, such as a boarding zone of a boarding platform alongside the door openings or a roof region in the vicinity of a current collector.

According to a first aspect of the invention, there is provided a rail vehicle having at least one car body, and a monitoring device comprising a video camera for monitoring a monitored zone located outside the car body, wherein the monitored zone extends either above a roof of the car body to include a current collector in an operative position and in a retracted position or alongside several side door openings provided in a side wall of the car body for boarding and alighting from the rail vehicle, characterised in that the video camera is located inside the car body and the monitoring device further comprises at least one image deflecting device which, in an operative position, is located at least partially outside the car body so as to redirect light from the monitored zone towards the video camera. As the video camera is located inside the vehicle, no cable passageway or bushing is necessary through the side wall. No particular provisions are to be taken to protect the video camera from bad weather.

The car body comprises a window opening filled with a pane of transparent material and is located in a light path between a front lens of the video camera and the image deflecting device in the operative position. The window opening may be filled with a pane of transparent material. The video camera and the deflecting device in the operative position are positioned so as to define a light path from the image defecting device to the front lens of the video camera perpendicular to the window opening. A compact device is obtained. The path of the light is short and image distortion can be easily avoided.

According to a preferred embodiment, the video camera is located in an end region of the car body. Alternatively, the video camera can be located in an intermediate portion of the car body. If the car body is too long for one video camera to monitor all the side door openings, more than one video camera can be provided, e.g. one video camera at a front end and one video camera in a middle section of the car body, both directed towards a rear end of the car body, or two video cameras located at both ends of the vehicle body and directed towards each other, or tow video cameras located in a middle section of the car body each directed towards one end of the car body. Another option is to use only one video camera located in a middle section of the car body, coupled to an image deflecting device that can redirect light from a part of the monitored zone situated towards a front end of the car body and that can redirect light from a part of the monitored zone situated towards a rear end of the car body. Such an image deflecting device can include e.g. two mirrors.

According to one embodiment, a motorized mechanism is provided to move the image deflecting device from the operative position protruding from the car body to a retracted position. The image deflecting device can be retracted when the vehicle moves, to minimise aerodynamic drag.

According to a simpler and preferred alternative, the image deflecting device is fixed relative to the car body.

A motorized mechanism may be provided to move the video camera relative to the car body, e.g. between two operative positions inside the car body, to change a view angle or to zoom in and out.

According to a preferred embodiment, a fixed protective shell protruding from the car body is provided to protect the image deflecting device.

Preferably, the image deflecting device is a rectilinear optic device that redirects an incident image from the monitored zone towards the video camera without distortion or without substantial distortion. The image deflecting device may include a mirror, in particular a planar mirror, or an optical prism.

According to an embodiment, the side wall extends at least in a vertical plane parallel to the longitudinal direction of travel, and the image deflecting device is provided at a longitudinal end and in an upper half of the side wall.

The images captured by the video cameras can be directed to a central control room.

However, according to a preferred embodiment, the rail vehicle further comprises a driver's cabin provided with a display device for displaying real-time images from the monitored zone taken by the video camera to provide driver-only operation. Preferably the video camera is connected to the display device via an internal wired network of the rail vehicle. A wireless network can be considered as an alternative.

According to another aspect of the invention, there is provided a method for monitoring a monitored zone located outside a car body of a rail vehicle extending either along a roof wall of the car body to include a current collector in an operative position and in a retracted position or in a front of several side door openings in a side wall of the car body, wherein light from the monitored zone is redirected by an image deflecting device towards a video camera located inside the rail vehicle.

### BRIEF DESCRIPTION OF THE FIGURES

Other advantages and features of the invention will then become more clearly apparent from the following description of a specific embodiment of the invention given as non-restrictive example only and represented in the accompanying drawings in which:
- figure 1 is a diagrammatic side view of a rail vehicle according to one embodiment of the invention;
- figure 2 is a diagrammatic top view of the rail vehicle of figure 1;
- figure 3 is a diagrammatic view of monitoring device of the rail vehicle of figure 1;
- figure 4 is a diagrammatic view of an on-board monitoring installation of the rail vehicle of figure 1, including the monitoring device of figure 3;
- figure 5 is a diagrammatic side view of a rail vehicle according to another embodiment of the invention.

Corresponding reference numerals refer to the same or corresponding parts in each of the figures.

### DETAILED DESCRIPTION OF A PREFERRED EMBODIMENT

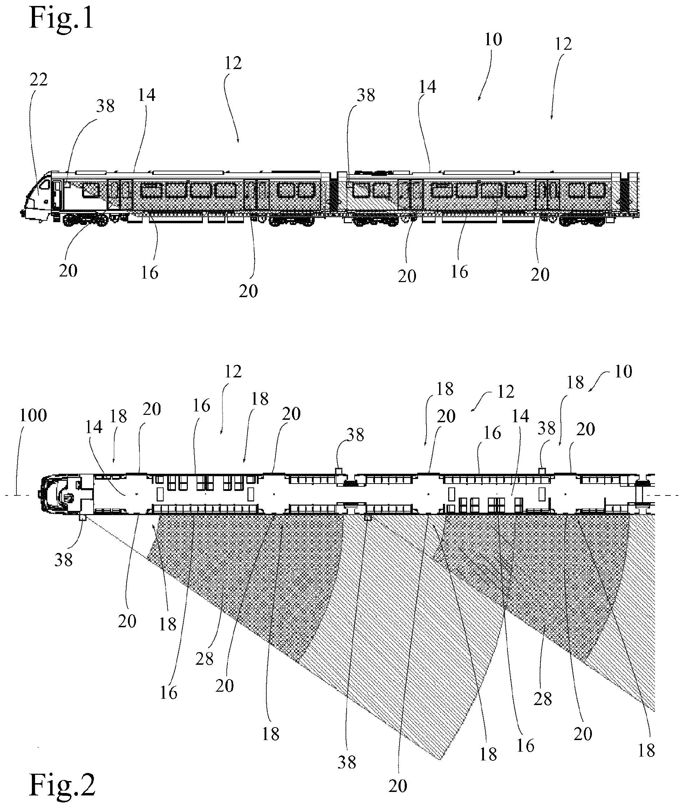

With reference to Figures **1** and **2****,** a rail vehicle **10,** in particular a metro or suburban multiple-unit rail vehicle, comprises a number of passenger cars **12,** each having a car body **14** comprising two side walls **16** each provided with several side door openings **18** for boarding and alighting from the passenger car **12,** each side door opening **18** being closed by doors **20.** The rail vehicle **10** is also provided with one or more driver's cabins **22,** e.g. one driver's cabin **22** at each end. Each passenger car **12** has a longitudinal direction of travel **100** and each side wall **16** extends substantially in a vertical plane parallel to the longitudinal direction of travel.

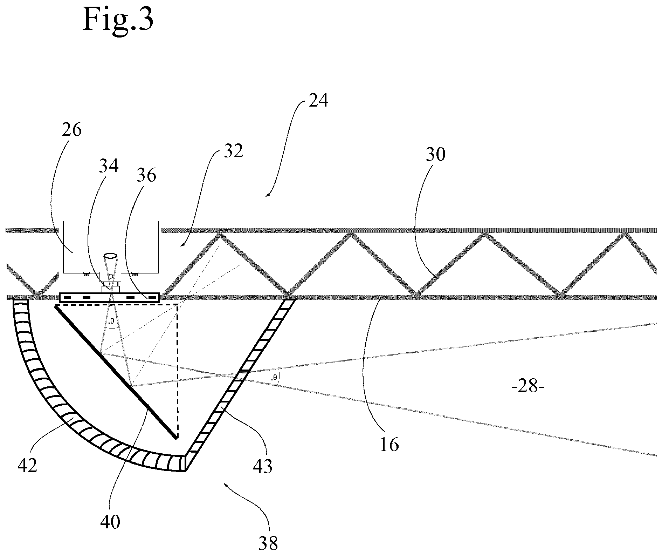

As illustrated in Figure **3****,** each passenger car **12** of the rail vehicle **10** is provided with a monitoring device **24,** which comprises, for each side wall **16** of each passenger car **12,** a single video camera **26** for monitoring a monitored zone **28** located at least alongside the corresponding side door openings **18.** The video camera **26** is located towards one end of the passenger car **12** and inside the car body **14,** i.e. within the volume defined by the outer shell of the side wall **16** of the car body **14.** More specifically, the car body **14** comprises extruded profiles **30** extending in a lengthwise direction and the video camera **26** is at least partially received in a cavity **32** of one of the extruded profiles **30.** The video camera **26** has a front lens **34,** which is directed perpendicularly to the side wall **16** towards a window opening in the side wall **16** filled with a pane of transparent material **36.**

An image deflecting device **38** protrudes from the side wall **16** outside the car body **14** in the region of the window opening. The image deflecting device **38** includes a mirror **40** oriented to redirect light from the monitored zone **28** towards a front lens **34** of the video camera **26** through the pane of transparent material **36.** The video camera **26** and the mirror **40** are positioned so as to define a light path from the image deflecting device **38** to the front lens **34** of the video camera **26** perpendicular to the window opening filled with the pane of transparent material **36** and to the side wall **16.**

The resulting field of vision of each video camera **26** is illustrated in Figures **1** and **2****.**

The image deflecting device **38** is a fixed structure provided with an opaque protective shell **42** protruding from the side wall **16** behind the mirror **40** to protect the image deflecting device **38** in one direction of travel and an oblique pane of transparent material **43,** preferably planar and at an angle with respect to the side wall **16,** placed in front of the mirror, i.e. between the monitored zone **28** and the mirror **40** to protect the image deflecting device **38** in the other direction of travel.

The mirror **40** is preferably planar, so as to avoid distortions of the incident image from the monitored zone **28** towards the video camera **26.**

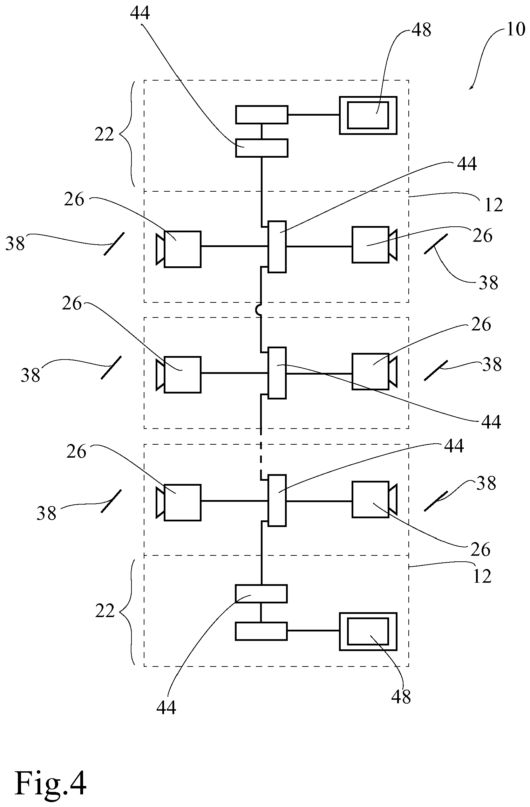

As illustrated in Figure **4****,** the video cameras **26** are connected to a wired or wireless internal train communication network **42,** such as an Ethernet network, which may include passenger car switches **44** in each passenger car **12** as well as in the driver's cabin **22.** A controller **46** in the driver's cabin **22** is connected to the network **42** and to a monitoring display **48,** so as to display real-time video footage from the various video cameras **26** on one side of the rail vehicle.

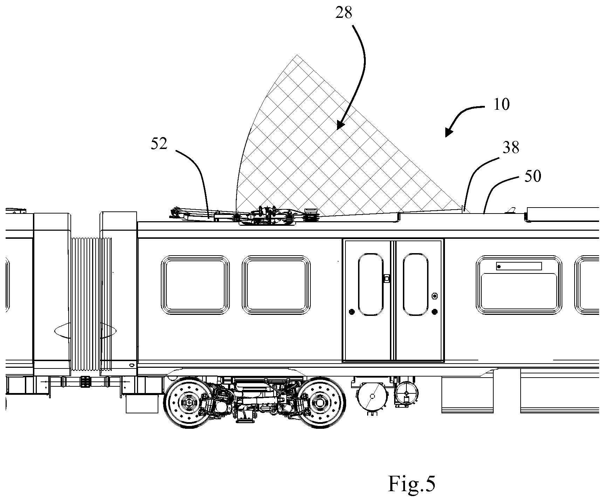

With reference to Figure **5****,** a similar monitoring device **24** is used to monitor a monitored zone **28** located on the roof **50** of a rail vehicle **10** in a region where a current collector **52,** e.g. a pantograph, extends. The rail vehicle **10** itself can be a unit of a multiple unit vehicle or a locomotive. The monitoring device **24** comprises, for each current collector **52** or a plurality of current collectors on the same car body **14,** a single video camera (not shown) located inside the car body **14,** i.e. within the volume defined by the outer shell of the roof **16** of the car body **14** and an image deflecting device **38** protruding from the roof **50.** The monitored zone **28** is large enough to cover the current collector **52** in its retracted position as shown in Figure 5 and in its extended position, in contact with an overhead line. This enables to control the position of the current collector **52** as well as its state, i.e. whether it is operational or defective. In other respects, the monitoring device is similar to the monitoring device of Figures **1** to **4****.** In particular, it is connected to a monitoring display **48** in the driver's cabin **22,** so as to display real-time video footage from the video cameras on the roof the rail vehicle **10.** If the same vehicle **10** includes monitoring devices on the roof **50** and on the side walls **16,** they can share a common internal train communication network **42,** and be displayed on the same monitoring display **48.**

While the above example illustrates a preferred embodiment of the present invention it is noted that various other arrangements of the monitoring device **24** may also be considered, which fall within the scope of the appended claims. In particular, the monitoring device **24** can be provided with a motorized mechanism to move the image deflecting device **38** from the operative position protruding from the side wall **16** to a retracted position. Alternatively or additionally, the video camera itself can be movable. In particular, one or several actuators can be used to pivot the video camera about one or more axes or rotation, to increase the size of the monitored zone and/or to translate the video camera towards or away from the image deflecting device **38** in the operative position. Such actuators may also be advantageous for the initial setup of the monitoring device, when the operator precisely defines the monitored zone of each video camera in a rail vehicle formation comprising several rail vehicles. After this initial setup, the video cameras can remain static.

Any alternative type of rectilinear optic device that redirects an incident image from the monitored zone **28** towards the video camera **26** without distortion or without substantial distortion can be used in lieu of the mirror **40,** in particular an optical prism.

More generally, features that have been described in connection with one embodiment can be included in other embodiments as well.

## Claims

1. A rail vehicle (10) having at least one car body (14), and a monitoring device (24) comprising a video camera (26) for monitoring a monitored zone (28) located outside the car body (14), wherein the monitored zone (28) extends either above a roof (50) of the car body (14) to include a current collector (52) in an operative position and in a retracted position or alongside several side door openings (18) provided in a side wall (16) of the car body (14) for boarding and alighting from the rail vehicle (10), **characterised in that** the video camera (26) is located inside the car body (14) and the monitoring device (24) further comprises at least one image deflecting device (38) which, in an operative position, is located at least partially outside the car body (14) so as to redirect light from the monitored zone (28) towards the video camera (26), wherein the car body (14) comprises a window opening located in a light path between a front lens (34) of the video camera (26) and the image deflecting device (38) in the operative position, and the window opening is perpendicular to the light path.

2. The rail vehicle (10) of claim 1, wherein the video camera (26) is located in an end region of the car body (14).

3. The rail vehicle (10) of any one of claims 1 to 2, further comprising a motorized mechanism to move the image deflecting device (38) from the operative position protruding from the car body (14) to a retracted position.

4. The rail vehicle (10) of any one of claims 1 to 2, wherein the image deflecting device (38) is fixed relative to the car body (14).

5. The rail vehicle (10) of any one of the preceding claims, further comprising a motorized mechanism to move the video camera (26) relative to the car body (14).

6. The rail vehicle (10) of any one of the preceding claims, further comprising a fixed protective shell (42) protruding from the car body (14) to protect the image deflecting device (38).

7. The rail vehicle (10) of any one of the preceding claims, wherein the image deflecting device (38) is a rectilinear optic device that redirects an incident image from the monitored zone (28) towards the video camera (26) without distortion or without substantial distortion.

8. The rail vehicle (10) of any one of the preceding claims, wherein the image deflecting device (38) includes a mirror (40).

9. The rail vehicle (10) of any one of the preceding claims, wherein the image deflecting device (38) includes an optical prism.

10. The rail vehicle (10) of any one of the preceding claims, wherein the rail vehicle (10) has a longitudinal direction of travel, the side wall (16) extends at least in a vertical plane parallel to the longitudinal direction of travel, and the image deflecting device (38) is provided at a longitudinal end and in an upper half of the side wall (16).

11. The rail vehicle (10) of any one of the preceding claims, further comprising a driver's cabin (22) provided with a display device (48) for displaying real-time images from the monitored zone (28) taken by the video camera.

12. The rail vehicle (10) of claim 11, wherein the video camera (26) is connected to the display device (48) via an internal wired network (42) of the rail vehicle (10).

13. A method for monitoring a monitored zone (28) located outside a car body (14) of a rail vehicle (10) extending either along a roof wall of the car body (14) to include a current collector in an operative position and in a retracted position or in front of several side door openings (18) in a side wall (16) of the car body (14), **characterised in that** light from the monitored zone (28) is redirected by an image deflecting device (38) towards a video camera (26) located inside the rail vehicle (10) through a window opening of the car body (14) located in a light path between a front lens (34) of the video camera (26) and the image deflecting device (38) in the operative position, perpendicularly to the light path.

14. The method of claim 13, further comprising displaying real-time images from the monitored zone (28) taken by the video camera on a display device (48), preferably a display device (48) located in a driver's cabin (22) of the rail vehicle (10).

## Patentansprüche

1. Schienenfahrzeug (10) mit wenigstens einem Wagenkörper (14) und einer Überwachungsvorrichtung (24), umfassend eine Videokamera (26) zum Überwachen eines überwachten Bereichs (28), der außerhalb des Wagenkörpers (14) angeordnet ist, wobei der überwachte Bereich (28) sich entweder oberhalb eines Dachs (50) des Wagenkörpers (14) erstreckt, um einen Stromabnehmer (52) in einer betriebsbereiten Position und in einer eingefahrenen Position oder entlang mehreren Seitentüröffnungen (18) zu enthalten, die in einer Seitenwand (16) des Wagenkörpers (14) zum Einsteigen und Aussteigen von dem Schienenfahrzeug (10) bereitgestellt sind, **dadurch gekennzeichnet, dass** die Videokamera (26) innerhalb des Wagenkörpers (14) angeordnet ist und die Überwachungsvorrichtung (24) weiterhin wenigstens eine Bild ablenkende Vorrichtung (38) umfasst, die in einer betriebsbereiten Position wenigstens teilweise außerhalb des Wagenkörpers (14) derart angeordnet ist, dass Licht von dem überwachten Bereich (28) zu der Videokamera (26) umgeleitet ist, wobei der Fahrzeugkörper (14) eine Fensteröffnung umfasst, die in einem Lichtpfad zwischen einer vorderen Linse (34) der Videokamera (26) und der Bild ablenkenden Vorrichtung (38) in der betriebsbereiten Position angeordnet ist und die Fensteröffnung lotrecht zu dem Lichtpfad ist.

2. Schienenfahrzeug (10) gemäß Anspruch 1, wobei die Videokamera (26) in einem Endbereich des Wagenkörpers (14) angeordnet ist.

3. Schienenfahrzeug (10) gemäß irgendeinem der Ansprüche 1 bis 2, weiterhin umfassend einen motorisierten Mechanismus zum Bewegen der Bild ablenkenden Vorrichtung (38) von der betriebsbereiten, von dem Wagenkörper (14) hervorstehenden Position in eine eingefahrene Position.

4. Schienenfahrzeug (10) gemäß irgendeinem der Ansprüche 1 bis 2, wobei die Bild ablenkende Vorrichtung (38) am Wagenkörper (14) befestigt ist.

5. Schienenfahrzeug (10) gemäß irgendeinem der voranstehenden Ansprüche, weiterhin umfassend einen motorisierten Mechanismus zum Bewegen der Videokamera (26) in Bezug auf den Wagenkörper (14).

6. Schienenfahrzeug (10) gemäß irgendeinem der voranstehenden Ansprüche, weiterhin umfassend eine befestigte Schutzhülle (42), die aus dem Wagenkörper (14) hervorsteht, um die Bild ablenkende Vorrichtung (38) zu schützen.

7. Schienenfahrzeug (10) gemäß irgendeinem der voranstehenden Ansprüche, wobei die Bild ablenkende Vorrichtung (38) eine geradlinige, optische Vorrichtung ist, die ein einfallendes Bild von dem überwachten Bereich (28) zu der Videokamera (269 ohne Verzerrung oder ohne wesentliche Verzerrung umlenkt.

8. Schienenfahrzeug (10) gemäß irgendeinem der voranstehenden Ansprüche, wobei die Bild ablenkende Vorrichtung (38) einen Spiegel (40) enthält.

9. Schienenfahrzeug (10) gemäß irgendeinem der voranstehenden Ansprüche, wobei die Bild ablenkende Vorrichtung (38) ein optisches Prisma enthält.

10. Schienenfahrzeug (10) gemäß irgendeinem der voranstehenden Ansprüche, wobei das Schienenfahrzeug (10) eine Fahrt-Längsrichtung aufweist, die Seitenwand (16) sich wenigstens in einer vertikalen Ebene parallel zur Fahrt-Längsrichtung erstreckt und die Bild ablenkende Vorrichtung (38) an einem länglichen Ende und in einer oberen Hälfte der Seitenwand (16) bereitgestellt ist.

11. Schienenfahrzeug (10) gemäß irgendeinem der voranstehenden Ansprüche, weiterhin umfassend eine Fahrerkabine (22), die mit einer Anzeigevorrichtung (48) zum Anzeigen von Echtzeit-Bildern, die von der Videokamera von dem überwachten Bereich (28) aufgenommen sind, bereitgestellt ist.

12. Schienenfahrzeug (10) gemäß Anspruch 11, wobei die Videokamera (26) an die Anzeigevorrichtung (48) über ein internes, verdrahtetes Netzwerk (42) des Schienenfahrzeugs (10) angeschlossen ist.

13. Verfahren zum Überwachen eines überwachten Bereichs (28), der außerhalb eines Wagenkörpers (14) eines Schienenfahrzeugs (10) angeordnet ist, das sich entweder entlang einer Dachwand des Fahrzeugkörpers (14), um einen Stromabnehmer in einer betriebsbereiten Position und in einer eingefahrenen Position oder vor den mehreren seitlichen Türöffnungen (18) in einer Seitenwand (16) des Wagenkörpers (14) zu enthalten, erstreckt, **dadurch gekennzeichnet, dass** Licht von dem überwachten Bereich (28) durch eine Bild ablenkende Vorrichtung (38) zu einer Videokamera (26), die innerhalb des Schienenfahrzeugs (10) angeordnet ist, durch eine Fensteröffnung des Wagenkörpers (14), die in einem Lichtpfad zwischen einer vorderen Linse (34) der Videokamera (26) und der Bild ablenkenden Vorrichtung (38) in der operativen Position lotrecht zum Lichtpfad angeordnet ist, abgelenkt wird.

14. Verfahren gemäß Anspruch 13, weiterhin umfassend das Anzeigen von Echtzeit-Bildern von dem überwachten Bereich (28), die von der Videokamera auf einer Anzeigevorrichtung (48), bevorzugt einer Anzeigevorrichtung (48) aufgenommen werden, die in einer Fahrerkabine (22) des Schienenfahrzeugs (10) angeordnet ist.

## Revendications

1. Véhicule ferroviaire (10) ayant au moins une carrosserie de voiture (14), et un dispositif de surveillance (24) comprenant une caméra vidéo (26) pour surveiller une zone surveillée (28) située à l'extérieur de la carrosserie de voiture (14), dans lequel la zone surveillée (28) s'étend soit au-dessus d'un toit (50) de la carrosserie de voiture (14) pour comprendre un collecteur de courant (52) dans une position fonctionnelle et dans une position rétractée, soit le long de plusieurs ouvertures de porte latérales (18) disposées dans une paroi latérale (16) de la carrosserie de voiture (14) pour monter à bord et descendre du véhicule ferroviaire (10), **caractérisé en ce que** la caméra vidéo (26) est située à l'intérieur de la carrosserie de voiture (14) et le dispositif de surveillance (24) comprend en outre au moins un dispositif de déviation d'image (38) qui, dans une position fonctionnelle, est situé au moins partiellement à l'extérieur de la carrosserie de voiture (14) de façon à rediriger la lumière provenant de la zone surveillée (28) vers la caméra vidéo (26), dans lequel la carrosserie de voiture (14) comprend une ouverture de fenêtre située sur un trajet lumineux entre une lentille frontale (34) de la caméra vidéo (26) et le dispositif de déviation d'image (38) en position fonctionnelle, et l'ouverture de fenêtre est perpendiculaire au trajet lumineux.

2. Véhicule ferroviaire (10) selon la revendication 1, dans lequel la caméra vidéo (26) est située dans une zone d'extrémité de la carrosserie de voiture (14).

3. Véhicule ferroviaire (10) selon l'une quelconque des revendications 1 à 2, comprenant en outre un mécanisme motorisé pour déplacer le dispositif de déviation d'image (38) de la position fonctionnelle en saillie par rapport à la carrosserie de voiture (14) à une position rétractée.

4. Véhicule ferroviaire (10) selon l'une quelconque des revendications 1 à 2, dans lequel le dispositif de déviation d'image (38) est fixe par rapport à la carrosserie de voiture (14).

5. Véhicule ferroviaire (10) selon l'une quelconque des revendications précédentes, comprenant en outre un mécanisme motorisé pour déplacer la caméra vidéo (26) par rapport à la carrosserie de voiture (14).

6. Véhicule ferroviaire (10) selon l'une quelconque des revendications précédentes, comprenant en outre une coque de protection fixe (42) faisant saillie de la carrosserie de voiture (14) pour protéger le dispositif de déviation d'image (38).

7. Véhicule ferroviaire (10) selon l'une quelconque des revendications précédentes, dans lequel le dispositif de déviation d'image (38) est un dispositif optique rectiligne qui redirige une image incidente de la zone surveillée (28) vers la caméra vidéo (26) sans distorsion ou sans distorsion substantielle.

8. Véhicule ferroviaire (10) selon l'une quelconque des revendications précédentes, dans lequel le dispositif de déviation d'image (38) comprend un miroir (40).

9. Véhicule ferroviaire (10) selon l'une quelconque des revendications précédentes, dans lequel le dispositif de déviation d'image (38) comprend un prisme optique.

10. Véhicule ferroviaire (10) selon l'une quelconque des revendications précédentes, dans lequel le véhicule ferroviaire (10) présente une direction longitudinale de déplacement, la paroi latérale (16) s'étend au moins dans un plan vertical parallèle à la direction longitudinale de déplacement, et le dispositif de déviation d'image (38) est prévu à une extrémité longitudinale et dans une moitié supérieure de la paroi latérale (16).

11. Véhicule ferroviaire (10) selon l'une quelconque des revendications précédentes, comprenant en outre une cabine de conduite (22) munie d'un dispositif d'affichage (48) pour afficher des images en temps réel de la zone surveillée (28) prises par la caméra vidéo.

12. Véhicule ferroviaire (10) selon la revendication 11, dans lequel la caméra vidéo (26) est reliée au dispositif d'affichage (48) par un réseau câblé interne (42) du véhicule ferroviaire (10).

13. Procédé de surveillance d'une zone surveillée (28) située à l'extérieur d'une carrosserie de voiture (14) d'un véhicule ferroviaire (10) s'étendant soit le long d'une paroi de toit de la carrosserie de voiture (14) pour inclure un collecteur de courant dans une position fonctionnelle et dans une position rétractée, soit devant plusieurs ouvertures de porte latérales (18) disposée dans une paroi latérale (16) de la carrosserie de voiture (14), **caractérisé en ce que** la lumière de la zone de surveillance (28) est redirigée par un dispositif de déviation d'image (38) vers une caméra vidéo (26) située à l'intérieur du véhicule ferroviaire (10) à travers une ouverture de fenêtre de la carrosserie de voiture (14) située sur un trajet lumineux entre une lentille frontale (34) de la caméra vidéo (26) et le dispositif de déviation d'image (38) en position fonctionnelle, perpendiculairement au trajet lumineux.

14. Procédé des revendications comprenant en outre l'affichage d'images en temps réel de la zone surveillée (28) prises par la caméra vidéo sur un dispositif d'affichage (48), de préférence un dispositif d'affichage (48) situé dans une cabine de conduite (22) du véhicule ferroviaire (10) .
